# EUROPÄISCHE PATENTSCHRIFT

(11) **EP 3 461 675 B1**
(45) Veröffentlichungstag und Bekanntmachung des Hinweises auf die Patenterteilung: **08.07.2020**
(21) Anmeldenummer: 18196748.0
(22) Anmeldetag: 26.09.2018
(51) Int. Cl.: B60L 3/10, B60T 8/17, B60T 8/172, G01M 17/013, G01M 17/06, G01M 17/08, G01M 17/10, G07C 5/00

(54) **VERFAHREN UND VORRICHTUNG ZUR BESTIMMUNG VON KRAFTSCHLUSSCHARAKTERISTIKEN**
METHOD AND DEVICE FOR DETERMINATION OF PRESS-FIT CHARACTERISTICS
PROCÉDÉ ET DISPOSITIF DE DÉTERMINATION DES CARACTÉRISTIQUES DE LIAISON DE FORCE

(30) Priorität: 26.09.2017 AT 508182017
(43) Veröffentlichungstag der Anmeldung: 03.04.2019
(73) Patentinhaber: Siemens Mobility Austria GmbH, 1210 Wien (AT)
(72) Erfinder: LUBER, Bernd Dr., 8045 Graz (AT); MEIERHOFER, Alexander Dr., 8042 Graz (AT); SIX, Klaus Dr., 8503 Stainztal (AT); YU, Minyi Dr., Maisach (DE); VON FLOTTWELL, Edward, 47829 Krefeld (DE); GOLKANI, Mohamed Ali, 8010 Graz (AT); JUNG, Martin, 91052 Erlangen (DE); KÄMPFER, Björn Dr., 8045 Graz (AT)
(74) Vertreter: Deffner, Rolf

(56) Entgegenhaltungen:
- EP-A1- 2 554 443
- EP-A1- 2 873 574
- DE-A1- 4 309 183
- K. SIX ET AL: "Physical processes in wheel-rail contact and its implications on vehicle-track interaction", VEHICLE SYSTEM DYNAMICS: INTERNATIONAL JOURNAL OF VEHICLE MECHANICS AND MOBILITY, Bd. 53, Nr. 5, 17. Dezember 2014 (2014-12-17), Seiten 635-650, XP055554513, GB ISSN: 0042-3114, DOI: 10.1080/00423114.2014.983675

## Beschreibung

Die Erfindung betrifft ein Verfahren und eine Vorrichtung zur Bestimmung von Kraftschlusscharakteristiken bei Fahrzeugen, insbesondere bei Schienenfahrzeugen, wofür zumindest Informationen zumindest eines ersten Fahrzeugs eingesetzt werden.

Kraftschlusscharakteristiken von Fahrzeugen betreffen eine Übertragung von Kräften zwischen Rädern und Fahrbahnen bzw. zwischen Rädern und Schienen bei Schienenfahrzeugen.
Im Kontakt zwischen Rädern und Schienen wird ein Kraftschlussbeiwert angesetzt, welcher von einer sich im Kontakt bildenden Zwischenschicht, Geschwindigkeiten, Beladungszuständen sowie von Umgebungsbedingungen, d.h. z.B. von Temperaturen, einer Feuchtigkeit bzw. Fluiden, Partikeln oder sonstigen Fremdkörpern etc. abhängt.
Der Kraftschlussbeiwert bestimmt, in welchem Ausmaß Kräfte im Rad-Schiene-Kontakt übertragen werden können. Ein Produkt aus einer Radaufstandskraft und dem Kraftschlussbeiwert muss größer oder gleich einer Tangentialkraft im Rad-Schiene-Kontakt sein, um ein Gleiten zwischen dem Rad und der Schiene auszuschließen.
Weiterhin sind für eine Kraftübertragung zwischen Rad und Schiene auch Schlüpfe, d.h. Geschwindigkeitsabweichungen zwischen zueinander in Reibkontakt angeordneten, tangential belasteten Körpern, in Längs- und Querrichtung des Rads bzw. der Schiene, entscheidend.
Eine schlechte Kraftübertragung zwischen Rad und Schiene kann beispielsweise zu verlängerten Bremswegen des Fahrzeugs und zu Beschädigungen bzw. Verschleiß an Rad und Schiene führen.

Eine genaue Einschätzung eines Kraftschluss-Schlupf-Verhaltens ist bei niedrigen Kraftschlussbeiwerten zwischen Rad und Schiene insbesondere bei Schienenfahrzeugen wichtig: Einerseits ist eine Einhaltung von Bremswegen sicherzustellen und andererseits müssen Beschädigungen bzw. Verschleiß an Rad und Schiene vermieden bzw. möglichst gering gehalten werden.

K. Six, A. Meierhofer, G. Müller und P. Dietmaier offenbaren in "Physical processes in wheel-rail contact and its implications on vehicle-track interaction", Vehicle System Dynamics, International Journal of Vehicle Mechanics and Mobility, DOI: 10.1080/00423114.2014.983675, 2014 ein Extended-Creep-Force-Modell (ECF-Modell) zur Beschreibung und Vorhersage von Reibungs- bzw. Kraftschlusseigenschaften zwischen Rad und Schiene auf Grundlage verschiedener Einflussfaktoren.
Das ECF-Modell ist in ein aus dem Stand der Technik bekanntes Mehrkörperdynamik-Softwareprodukt implementiert und es werden damit in Abhängigkeit verschiedener Einflussfaktoren (z.B. Fahrgeschwindigkeit, Beladung, Geometrie des Kontakts zwischen Rad und Schiene, Flüssigkeiten und/oder Partikel zwischen Rad und Schiene) Kraftschlüsse bzw. Kraftschlussbeiwerte bestimmt. Weiterhin sind auch ein Fluid-Modell zur Bestimmung von Drücken aufgrund von Flüssigkeiten im Kontakt, ein werkstoffabhängiges, druck- und temperaturabhängiges, Modell einer elastisch-plastischen Zwischenschicht zwischen Rad und Schiene (Bürstenmodell auf Grundlage serieller Steifigkeiten) sowie ein Temperaturmodell zur Ermittlung von Kontakttemperaturen zwischen Rad und Schiene in das ECF-Modell implementiert.
Drücke in dem Modell für die Zwischenschicht werden beispielsweise nach einer Theorie von Hertz bestimmt, die Kontakttemperaturen werden iterativ bestimmt.
Die implementierten Modelle beeinflussen einander und können auch mit weiteren Modellen, beispielweise mit Antriebs- und Bremsmodellen für Fahrzeuge (z.B. für Lokomotiven) verknüpft werden.

C. P. Ward, R. M. Goodall und R. Dixon beschreiben in "Contact Force Estimation in the Railway Vehicle Wheel-Rail Interface", Preprints of the 18th IFAC World Congress Milano (Italy), 2011 ein Verfahren zur Schätzung von Kontaktkräften zwischen Rad und Schiene in Echtzeit. Es sind ein nichtlineares Kontaktmodell auf Grundlage eines Wagenkastens und von Fahrwerken eines Schienenfahrzeugs, wobei ein dynamisches Verhalten des Schienenfahrzeugs in Quer- und in Gierrichtung modelliert ist, sowie ein Kalman-Bucy-Filter offenbart.
Mittels des Kontaktmodells kann Verschleiß an Rädern geschätzt werden.

Weiterhin offenbaren O. Polach in "Creep forces in simulations of traction vehicles running on adhesion limit", Wear 258 (2005), 992-1000 und G. Trümmer, L. Buckley-Johnstone, P. Voltr, A. Meierhofer, R. Lewis, K. Six in "Wheel-rail creep force model for predicting water induced low adhesion phenomena", Tribology International 109 (2017), 409-415 Kraftschlussmodelle.

Weiterhin zeigt die DE 100 17 613 A1 ein Verfahren zur Einschätzung eines Kraftschlussverhaltens. Es wird eine Steigung einer Kraftschlussfunktion in Abhängigkeit eines Längsschlupfes zwischen Rad und Unterlage geschätzt.
Es werden Modelle zur mathematischen Beschreibung eines Antriebsstrangs sowie eines Kontakts zwischen Rad und Unterlage eingesetzt. Aus einem Differentialgleichungssystem wird die Steigung der Kraftschlussfunktion bestimmt.

Darüber hinaus ist in der EP 2 918 459 A1 ein Verfahren beschrieben, mit dem ein Haftungskoeffizient zwischen Rad und Schiene während Brems- oder Antriebsvorgängen zumindest eines Radsatzes eines Schienenfahrzeugs bestimmt wird. Für das Verfahren können beispielsweise eine Radlast, ein Radius des Rads und eine Bremskraft berücksichtigt werden.

Ferner zeigt die DE 10 2014 201 729 A1 ein Schienenfahrzeug mit einer Sensoreinheit, mittels derer zumindest eine Fahrdynamik-Kenngröße erfasst wird. Mittels einer Auswerteeinheit wird auf Grundlage dieser Fahrdynamik-Kenngröße eine Verschleißkenngröße bestimmt, welche beispielsweise eine Abnutzung eines Gleises angibt.
Weiterhin ist die EP 0 826 548 A1 bekannt, in der ein kraftschlussabhängiges Regelungsverfahren für ein Schienenfahrzeug offenbart ist. In Abhängigkeit von einer Steigung einer Kraftschlusskennlinie werden Regelungsmaßnahmen zur fahrtechnischen Stabilisierung des Schienenfahrzeugs umgesetzt, vorzugsweise unter Einsatz einer Drehzahlregelung.
Darüber hinaus beschreibt die EP 0 195 249 A2 ein Verfahren, mit dem beispielsweise ein Gleiten von Fahrzeugen festgestellt werden kann. Einem Betriebsmoment eines elektrischen Motors wird ein Wechselmoment überlagert und eine Systemantwort auf dieses Wechselmoment mittels einer Korrelationsrechnung ausgewertet. Damit wird festgestellt, ob ein Gleitzustand des Fahrzeugs vorliegt.

Die DE 43 09 183 A1 offenbart ein Verfahren zur Optimierung einer Reibkraft im Kontakt zwischen einem Rad und einer Schiene eines Fahrzeugs, wofür eine variable Korrekturgröße für einen Schlupf gebildet wird und ein Fuzzy-Regler eingesetzt ist. Mittels Bewegungsgleichungen wird eine Fahrzeugdynamik modelliert, wobei eine auf das Fahrzeug übertragene Antriebskraft aus einem schlupfabhängigen Kraftschlussbeiwert gebildet wird. Der schlupfabhängige Kraftschlussbeiwert wird aus einer parabelförmigen Kraftschluss-Schlupf-Funktion bestimmt.

Weiterhin zeigt die EP 2 873 574 A1 ein Verfahren zum Einsatz eines ermittelten Reibungskoeffizienten zwischen Rädern eines Flugzeugs und einer Landebahn in einem Bremsregler.

Darüber hinaus offenbart die EP 2 554 443 A1 eine Vorrichtung und ein Verfahren zur Bestimmung eines Zustands einer Landebahn sowie ein Flugsteuersystem auf Grundlage ermittelter Landebahnbedingungen.

Der Erfindung liegt die Aufgabe zugrunde, ein gegenüber dem Stand der Technik verbessertes Verfahren anzugeben. Erfindungsgemäß wird diese Aufgabe gelöst mit einem Verfahren nach Anspruch 1, bei dem zeitabhängige Kraftschluss-Schlupfkennlinien, zumindest eine erste Kraftschluss-Schlupfkennlinie und eine zweite Kraftschluss-Schlupfkennlinie, gebildet werden, wobei die Kraftschluss-Schlupfkennlinien auf unterschiedliche Zeitpunkte oder Zeiträume sowie unterschiedliche Orte, Streckenabschnitte oder Strecken beziehbar sind,
bei dem aus den Kraftschluss-Schlupfkennlinien Sollschlüpfe ermittelt werden, und
bei dem mittels der Sollschlüpfe Fahrzeugbewegungen beeinflusst werden.

Durch eine Bildung von zeitabhängigen Kraftschluss-Schlupfkennlinien, d.h. eine Berücksichtigung von aktuellem und vergangenem Kraftschlussverhalten, werden umfassende und somit genaue Informationen über eine Übertragung von Kräften zwischen Rädern von Fahrzeugen und Unterlagen, z.B. zwischen Rädern von Schienenfahrzeugen und Schienen, erzeugt. Diese Informationen sind eine vorteilhafte Grundlage für eine Sollschlupf-basierte Regelung von Antrieben und Bremsen und für eine Verschleiß- und Schädigungsprognose von Rädern und Unterlagen, z.B. Schienen.

Verschleiß und Schäden an Fahrzeugen und Infrastruktur können damit reduziert und Wartungs- bzw. Instandhaltungsvorgänge vereinfacht werden.

Die verbesserte, Sollschlupf-basierte Regelung von Antrieben und Bremsen bewirkt ein verbessertes Beschleunigungs- und Verzögerungsvermögen des Fahrzeugs bei schlechten Kraftschlussbedingungen (z.B. feuchte Schiene). Dadurch werden Energieverbräuche und Fahrzeiten gesenkt, Sicherheiten durch eine Reduktion von Bremswegen erhöht sowie Fahrplanstabilitäten verbessert. Bei Lokomotiven ist eine Erhöhung von Anhängelasten möglich bzw. kann eine bestimmte Anzahl an angetriebenen Radsätzen durch Radsätze ohne Antriebe ersetzt werden.

Erfindungsgemäß werden die Kraftschluss-Schlupfkennlinien unter Einsatz eines Kraftschlussmodells gebildet.

Durch diese Maßnahme können Informationen über verschiedene Abhängigkeiten der Kraftschluss-Schlupfkennlinien (z.B. eine Abhängigkeit von einer Fahrzeuggeschwindigkeit) gebildet werden. Weiterhin können dadurch Kraftschlussbeiwerte für einen großen Schlupfbereich ermittelt werden.

Es ist günstig, wenn die Kraftschluss-Schlupfkennlinien unter Einsatz von Umweltinformationen gebildet werden.
Durch diese Maßnahme wird eine besonders realitätsgetreue und genaue Ermittlung von Kraftschlussbeiwerten erzielt.

Eine vorteilhafte Ausgestaltung erhält man, wenn aus den Kraftschluss-Schlupfkennlinien zumindest eine thematische Karte gebildet wird.
Durch diese Maßnahme wird eine zeit- und ortsabhängige Übersicht über auftretende Kraftschlüsse erzielt. Die thematische Karte kann ähnlich einer Bremstafel in digitaler Form vorliegen und es können daraus Kraftschluss-Schlupfkennlinien für verschiedene Strecken und verschiedene Streckenabschnitte zu verschiedenen Zeiten (z.B. Tageszeiten) und verschiedene Benetzungszustände der Unterlage, z.B. der Schiene (z.B. trocken, feucht etc.) ausgelesen werden. Auslesevorgänge können beispielsweise mittels Recheneinheiten in Fahrzeugen erfolgen.

Es ist günstig, wenn die Kraftschluss-Schlupfkennlinien unter Einsatz von Informationen über Querbeschleunigungen des zumindest ersten Fahrzeugs gebildet werden.
Durch diese Maßnahme können Kraftschluss-Schlupfkennlinien auch dann ermittelt werden, wenn keine entsprechenden Informationen aus Antrieben oder Bremsen verfügbar sind (beispielsweise bei nicht angetriebenen Fahrwerken bzw. Radsätzen).
Fehler bei der Bildung der Kraftschluss-Schlupfkennlinien aufgrund von Einflüssen, welche nicht von Reibungsbedingungen zwischen dem Rad und der Unterlage stammen, werden durch eine Verortung auf einen Strecken- bzw. Gleisabschnitt reduziert.

Erfindungsgemäß werden die Sollschlüpfe unter Einsatz von Antriebs- und Bremsmodellen gebildet.

Aufgrund der Antriebs- und Bremsmodelle bzw. Simulationen und Rechenergebnissen aus diesen Modellen kann ein Auftreten von Schwingungen den Kraftschluss-Schlupfkennlinien zugeordnet werden. Es werden durch eine gezielte Einstellung von Sollschlüpfen in Kraftschluss-Schlupfbereichen, in denen keine Schwingungen zu erwarten sind, eine Reduktion von Antriebsstrangschwingungen und somit eine Entlastung mechanischer Antriebskomponenten des Fahrzeugs, eine Steigerung von Zug- und Bremskräften sowie eine Fahrkomfortverbesserung erzielt.

Erfindungsgemäß werden die Sollschlüpfe unter Einsatz von Schädigungsmodellen gebildet. Durch diese Maßnahme können Sollschlüpfe in einer Weise eingestellt werden, so dass Schäden an Antriebs- und Bremskomponenten vermieden werden.

Eine vorteilhafte Ausgestaltung erhält man, wenn Informationen bezüglich der Kraftschluss-Schlupfkennlinien von dem zumindest ersten Fahrzeug zumindest an ein zweites Fahrzeug übertragen werden.
Durch diese Maßnahme können in dem ersten Fahrzeug gebildete Kraftschluss-Schlupfkennlinien auch in dem zweiten Fahrzeug, wobei es sich um ein einzelnes Fahrzeug oder beispielsweise um einen Zugteil in einem Zugverband (z.B. in einem Triebzug) handeln kann, ausgewertet werden. Erfolgt auch in dem zweiten Fahrzeug eine Bildung von Kraftschluss-Schlupfkennlinien, so erweitern sich in dem zweiten Fahrzeug verfügbare Kraftschluss-Informationen und es erfolgt eine weitere Genauigkeitssteigerung bei der Ermittlung von Sollschlüpfen. Eine vorteilhafte Lösung wird erzielt, wenn Informationen bezüglich der Kraftschluss-Schlupfkennlinien von dem zumindest ersten Fahrzeug zumindest an eine erste Infrastruktureinrichtung übertragen werden.
Dadurch können die Informationen über Kraftschluss-Schlupfkennlinien zentral gespeichert sowie ausgewertet und bzw. oder an andere auswertende Einheiten weiterverteilt werden.

Nachfolgend wird die Erfindung anhand von Ausführungsbeispielen näher erläutert.

Es zeigen beispielhaft:
- Fig. 1:: Ein Flussdiagramm einer beispielhaften Ausführung eines erfindungsgemäßen Verfahrens,
- Fig. 2:: Ein Diagramm einer beispielhaften Ausführung eines erfindungsgemäßen Verfahrens mit einer ersten Kraftschluss-Schlupfkennlinie und einer zweiten Kraftschluss-Schlupfkennlinie,
- Fig. 3:: Eine schematische Darstellung eines beispielhaften Antriebs- und Bremssystems, dessen Modell zur Ermittlung von Sollschlüpfen eingesetzt wird, und
- Fig. 4: Eine schematische Darstellung eines ersten Streckenabschnitts mit einem ersten Fahrzeug, eines zweiten Streckenabschnitts mit einem zweiten Fahrzeug sowie einer ersten Infrastruktureinrichtung und einer zweiten Infrastruktureinrichtung.

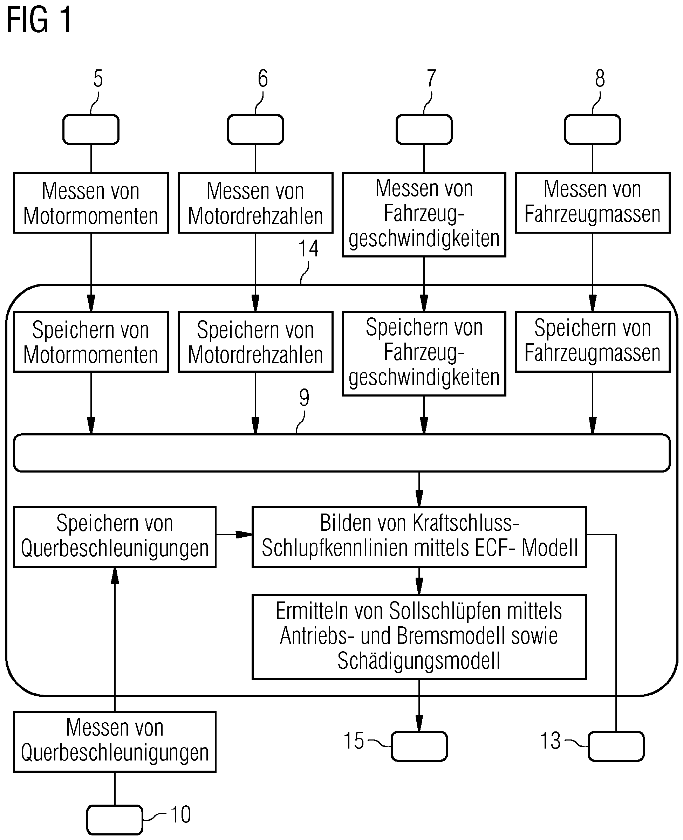

Fig. 1 zeigt ein erstes Flussdiagramm einer beispielhaften Ausführung eines erfindungsgemäßen Verfahrens zur Bildung von Kraftschluss-Schlupfkennlinien und zur Ermittlung von Sollschlüpfen in einem als Schienenfahrzeug ausgebildeten Fahrzeug mit elektrischem Antrieb und pneumatischer Bremse. Erfindungsgemäß ist es auch denkbar, dass das Schienenfahrzeug beispielsweise einen mechanischen Antrieb aufweist.
Als Bremsausrüstung ist beispielsweise auch ein hydraulisches System vorstellbar.

Das Schienenfahrzeug weist Wagenkästen und Fahrwerke auf, wobei die Fahrwerke jeweils zwei Radsätze mit jeweils zwei Rädern umfassen.
Es werden Motormomente und Motordrehzahlen des elektrischen Antriebs mittels entsprechender Sensoren gemessen, die Motormomente mittels eines Drehmomentensensors 5 und die Motordrehzahlen mittels eines Drehzahlsensors 6.
Weiterhin erfolgen mittels eines Wegimpulsgebers 7 an einem Radsatz Messungen einer Fahrzeuggeschwindigkeit. Sekundärfedern des Schienenfahrzeugs sind als Luftfedern ausgebildet. Über Messungen von Luftfederdrücken mittels eines entsprechenden Drucksensors 8 werden Fahrzeugmassen bestimmt.
Die Motordrehzahlen und die Fahrzeuggeschwindigkeiten stellen kinematische Informationen des Schienenfahrzeugs dar, die Fahrzeuggeschwindigkeiten Geschwindigkeitsinformationen des Schienenfahrzeugs, die Motormomente, welche während Antriebs-und Bremsvorgängen des Schienenfahrzeugs erfasst werden, Antriebsinformationen und Bremsinformationen.
Die kinematischen Informationen, Informationen bezüglich der Motormomente und der Fahrzeugmasse werden an einen aus dem Stand der Technik bekannten, referenzgeregelten Synthetisierer 9 übertragen, wodurch sich über eine Zeit vergrößernde Fehler (beispielsweise aufgrund von Trägheitseffekten des Antriebs oder einer Bremse) bei der Bildung der Kraftschluss-Schlupfkennlinien vermieden werden.

Als Kraftschlussmodell wird das von K. Six et al. offenbarte ECF-Modell angewendet.
Erfindungsgemäß ist es auch denkbar, ein anderes aus dem Stand der Technik bekanntes Kraftschlussmodell (z.B. Kraftschlussmodelle nach O. Polach oder G. Trummer et al.) einzusetzen.

Mittels des Kraftschlussmodells werden laufend, d.h. während Fahrten des Schienenfahrzeugs auf Strecken, aus den kinematischen Informationen, den Motormomenten sowie den Fahrzeugmassen Kraftschlüsse bzw. Kraftschlussbeiwerte zwischen Rad und Schiene sowie damit in Zusammenhang stehende Schlüpfe gebildet, d.h. Kraftschlusscharakteristiken (Kraftschluss als Funktion von Schlupf) erzeugt, und gespeichert.
Dabei werden zunächst Reibkräfte bzw. Kraftschlussbeiwerte zwischen Rad und Schiene aus den genannten kinematischen Informationen bzw. Geschwindigkeitsinformationen sowie den Antriebsinformationen und Bremsinformationen bzw. aus der Fahrzeuggeschwindigkeit, einer Radumfangsgeschwindigkeit, einer Antriebs- bzw. Bremskraft und einer Radaufstandskraft gebildet.

Aus den Reibkräften bzw. Kraftschlussbeiwerten werden Arbeitspunkte gebildet und mittels eines Optimierungsalgorithmus auf Grundlage einer Ausgleichungsrechnung Kraftschluss-Modellparameter des ECF-Modells an die Arbeitspunkte angepasst.
Dadurch werden Informationen über alle Arbeitspunkte hinweg, d.h. über einen gesamten Arbeitsbereich (Schlupfbereich) erzeugt.

Erfindungsgemäß kann nicht nur die Kraftschlusscharakteristik über den Schlupf ermittelt werden, sondern es können auch Informationen über Abhängigkeiten der Kraftschlusscharakteristik von der Fahrzeuggeschwindigkeit, einer Radlast, einer Kontaktgeometrie zwischen Rad und Schiene usw. gebildet werden.
Bei der Anpassung der Kraftschluss-Modellparameter an die Arbeitspunkte können entweder nur die aktuell beobachteten Arbeitspunkte berücksichtigt werden oder auch gewichtete Werte zu Arbeitspunkten aus der Vergangenheit mit einbezogen werden.
Werden nur aktuelle Werte eingesetzt, verändert sich die Kraftschlusscharakteristik in Abhängigkeit von im Kontakt zwischen Rad und Schiene vorliegenden Reibungsverhältnissen eher schnell.
Werden Werte aus der Vergangenheit mit einbezogen, verändert sich die Kraftschlusscharakteristik eher langsam.
Weiterhin können Arbeitspunkte für kleine Schlüpfe im Vergleich zu Arbeitspunkten für große Schlüpfe unterschiedlich gewichtet werden. Dadurch wird eine hohe Robustheit des erfindungsgemäßen Verfahrens erzielt.

Weiterhin werden in die Bildung der Kraftschluss-Schlupfkennlinien auch Umweltinformationen eingesetzt, beispielsweise Außen- bzw. Umgebungstemperaturen, Regenmengen, Vegetation etc.
Auf Grundlage von Temperatur- und Luftfeuchtigkeitsmessungen und aus dem Stand der Technik bekannter thermodynamischer Zusammenhänge werden Kondensatmengen auf einer Schiene, d.h. eine Feuchtigkeit der Schiene abgeschätzt und damit die Bildung der Kraftschluss-Schlupfkennlinien beeinflusst.

Es werden laufend Querbeschleunigungen des Schienenfahrzeugs mittels eines an einem Fahrwerksrahmen angeordneten Beschleunigungssensors 10 gemessen und gespeichert. Erfindungsgemäß ist es auch vorstellbar, auf eine Messung von Querbeschleunigungen zu verzichten und Kraftschlusscharakteristiken allein auf Grundlage eines Kraftschlussmodells (z.B. des ECF-Modells) zu bilden.

Werden Querbeschleunigungen gemessen, so wird auf Grundlage von entsprechenden Messergebnissen ein mathematischer Zusammenhang gebildet, in dem steigende Querbeschleunigungen zu steigenden Kraftschlüssen führen. Daraus werden Kraftschlüsse bzw. Kraftschlussbeiwerte insbesondere dann bestimmt, wenn keine Information aus dem Antrieb und der Bremse verfügbar sind (beispielsweise dann, wenn die Kraftschluss-Schlupfkennlinien für Radsätze, welche keinen Antrieb und keine Bremse aufweisen, bestimmt werden).

Fahrten des Schienenfahrzeugs über gleiche Strecken werden hinsichtlich der erfassten Querbeschleunigungen laufend miteinander verglichen. Dazu werden je Streckenabschnitt Standardabweichungen der Querbeschleunigungen gebildet und gespeichert. Sich innerhalb eines definierten Zeitraums für einen bestimmten Streckenabschnitt ändernde Standardabweichungen weisen auf geänderte Kraftschlussbedingungen zwischen Rad und Schiene hin.

Zur Kalibrierung des Zusammenhangs zwischen Querbeschleunigungen und Kraftschlüssen können Ergebnisse aus der Bildung der Kraftschlusscharakteristiken auf Grundlage der kinematischen Informationen sowie der Antriebsinformationen und Bremsinformationen, der Anpassung der ECF-Modellparameter an die Arbeitspunkte etc. eingesetzt werden.

Durchgeführte Instandhaltungsvorgänge auf den Strecken, z.B. ein Schleifen von Gleisen, können zu einem geänderten Querbeschleunigungsverhalten des Schienenfahrzeugs führen. Der laufende Vergleich von Querbeschleunigungen muss daher in einem derartigen Fall neu gestartet werden, d.h. es ist eine Neukalibrierung erforderlich.
Weiterhin bewirkt ein Stopfvorgang an einem Gleis eine geänderte Quer- und Vertikaldynamik des Schienenfahrzeugs. Der Stopfvorgang kann somit beispielsweise anhand von gemessenen Achslager-Vertikalbeschleunigungen detektiert werden. Auf dieser Grundlage kann die Neukalibrierung des oben genannten Zusammenhangs zwischen Querbeschleunigungen und Kraftschlüssen durchgeführt werden.

Mittels der kinematischen Informationen, der Antriebsinformationen und Bremsinformationen, der Anpassung der ECF-Modellparameter an die Arbeitspunkte etc. bestimmte Kraftschlussbeiwerte werden mit den berechneten Standardabweichungen aus den Querbeschleunigungen korreliert. Kraftschlussänderungen auf einem bestimmten Streckenabschnitt, welche sich nicht mit einer entsprechenden Änderung der berechneten Standardabweichung in Verbindung bringen lassen, werden als Fehler erkannt und verworfen.

Aus den gespeicherten Kraftschlüssen bzw. Kraftschlussbeiwerten und Schlüpfen werden zeit- und ortsabhängige Kraftschluss-Schlupfkennlinien gebildet, d.h. zeit- und ortsabhängige Zusammenhänge zwischen Kraftschlüssen und Schlüpfen bzw. zeit- und ortsabhängige Kraftschluss-Schlupffunktionen. Einem Streckenabschnitt und einer bestimmten Jahreszeit, welche mit bestimmten Witterungsbedingungen verbunden ist, ist beispielsweise eine erste Kraftschluss-Schlupfkennlinie 11 zugeordnet. Eine zweite Kraftschluss-Schlupfkennlinie 12 gilt beispielsweise für denselben Streckenabschnitt zu einer anderen Jahreszeit. Den Kraftschluss-Schlupfkennlinien werden mittels einer Zeitaufzeichnung entsprechende Zeitangaben zugeordnet, mittels einer Ortserfassung aus Ortungssignalen eines als aus dem Stand der Technik bekannten Global Positioning System (GPS) ausgeführten Fahrzeugortungssystems 13 des Fahrzeugs entsprechende Ortsangaben (bzw. Angaben bezüglich Streckenabschnitten oder Strecken).
Erfindungsgemäß ist es auch denkbar, dass die Ortungssignale des Fahrzeugortungssystems 13 auch zur Bestimmung der Fahrzeuggeschwindigkeiten bzw. zur Genauigkeitssteigerung der von dem Wegimpulsgeber 7 gemessenen Fahrzeuggeschwindigkeiten eingesetzt werden.

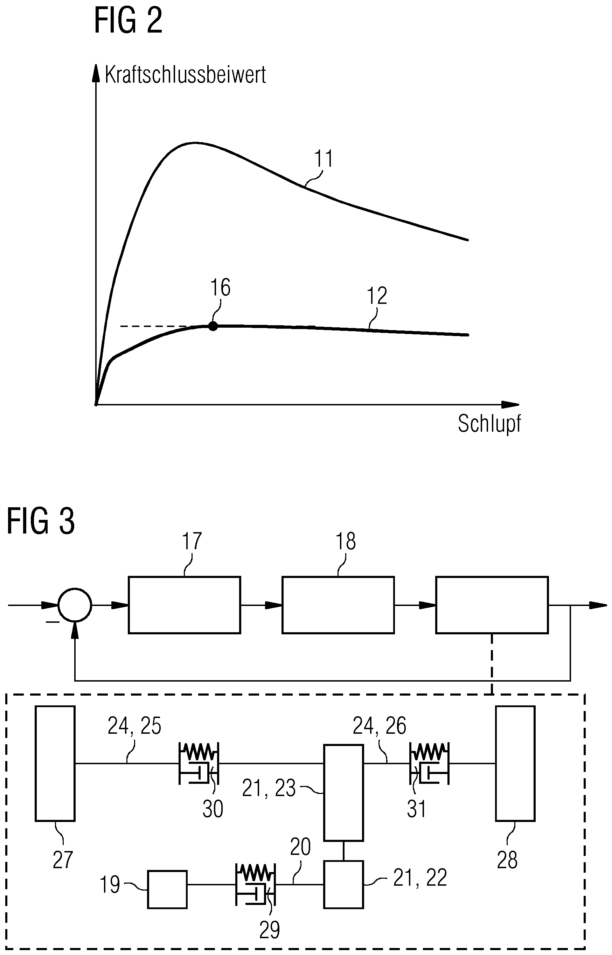

Aus den ermittelten Kraftschluss-Schlupfkennlinien werden in Echtzeit Sollschlüpfe ermittelt, welche ein Anfahren und Bremsen des Schienenfahrzeugs auf einem möglichst geringen Schlupf-Niveau ermöglichen. Zunächst wird ein in Fig. 2 beispielhaft gezeigter Abszissenwert eines berechneten Maximums einer Kraftschluss-Schlupffunktion bestimmt.
Unter Einsatz eines Antriebs- und Bremsmodells eines in Fig. 3 gezeigten Antriebs- und Bremssystems und eines thermischen Schädigungsmodells betreffend Rad-Schiene-Kontakte werden Sollschlüpfe in einer Weise eingestellt (d.h. z.B. begrenzt), um übermäßigen Verschleiß und Schäden an Antrieb, Rädern und Schienen zu vermeiden.
D.h. der Abszissenwert des berechneten Maximums der Kraftschluss-Schlupffunktion wird nicht als Sollschlupf ausgewählt, sondern ein mittels des Antriebs- und Bremsmodells und des thermischen Schädigungsmodells eingestellter, d.h. optimierter Schlupf, mittels dessen einerseits übermäßiger Verschleiß und Schäden vermieden und anderseits eine möglichst gute Kraftübertragung zwischen Rad und Schiene ermöglicht werden.

Die ermittelten Kraftschluss-Schlupffunktionen werden in das Schädigungsmodell eingesetzt und es werden mittels des Schädigungsmodells Temperaturen zwischen Rädern und Schiene in Abhängigkeit von Kraftschlüssen und Schlüpfen ermittelt. Sollschlüpfe werden in einer Weise begrenzt, dass Austenitisierungstemperaturen der Räder und bzw. oder der Schiene nicht überschritten werden.
Erfindungsgemäß ist es auch denkbar, andere bzw. weitere Schädigungsmodelle einzusetzen, beispielsweise Rollkontaktermüdungsmodelle oder Verschleißmodelle, die auch als Schädigungsmodelle angesehen werden.

Die kinematischen Informationen, Informationen bezüglich der Motormomente, der Fahrzeugmassen etc. werden in einer Recheneinheit 14, welche in einem Wagenkasten des Schienenfahrzeugs angeordnet ist, zu den Kraftschluss-Schlupfkennlinien verarbeitet. Das ECF-Modell, das Antriebs-und Bremsmodell und das Schädigungsmodell sind in dieser Recheneinheit 14 implementiert.
Erfindungsgemäß ist es auch vorstellbar, dass die Recheneinheit 14 in einer Infrastruktureinrichtung angeordnet ist und Daten bezüglich der Kraftschluss-Schlupfkennlinien von dort in das Schienenfahrzeug übertragen werden.

Die Sollschlüpfe werden zur Beeinflussung von Fahrzeugbewegungen bzw. zur Traktionskontrolle an einen aus dem Stand der Technik bekannten Antriebs- und Bremsregler 15 übertragen, welcher Motordrehzahlen und Bremskräfte in einer Weise regelt, dass die berechneten Sollschlüpfe eingehalten werden.

Der Drehmomentensensor 5, der Drehzahlsensor 6, der Wegimpulsgeber 7, der Drucksensor 8, der Beschleunigungssensor 10, das Fahrzeugortungssystem 13, die Recheneinheit 14 sowie der Antriebs- und Bremsregler 15 sind Mittel zur Bildung der Kraftschluss-Schlupfkennlinien, zur Ermittlung der Sollschlüpfe sowie zur Beeinflussung der Fahrzeugbewegungen.

Fig. 2 zeigt ein Diagramm einer beispielhaften Ausführung eines erfindungsgemäßen Verfahrens mit einer ersten Kraftschluss-Schlupfkennlinie 11 und einer zweiten Kraftschluss-Schlupfkennlinie 12 als Kraftschlusscharakteristik. Auf der zweiten Kraftschluss-Schlupfkennlinie 12 ist ein Sollschlupfwert 16 markiert, der mittels des in Zusammenhang mit Fig. 1 beschriebenen Verfahrens bestimmt wurde.
Auf einer Abszisse des Diagramms sind Schlüpfe aufgetragen, auf einer Ordinate Kraftschlussbeiwerte.
Die erste Kraftschluss-Schlupfkennlinie 11 gibt eine erste Kraftschluss-Schlupfunktion zu einem ersten Zeitpunkt an, die zweite Kraftschluss-Schlupfkennlinie 12 eine zweite Kraftschluss-Schlupffunktion zu einem zweiten Zeitpunkt.

Die erste Kraftschluss-Schlupfkennlinie 11 und die zweite Kraftschluss-Schlupfkennlinie 12 beziehen sich auf einen Streckenabschnitt eines Streckennetzes für Schienenfahrzeuge.

Erfindungsgemäß ist es selbstverständlich möglich, dass mehr Kraftschluss-Schlupfkennlinien als die erste Kraftschluss-Schlupfkennlinie 11 und die zweite Kraftschluss-Schlupfkennlinie 12 aufgezeichnet werden. Dabei können sich die Kraftschluss-Schlupfkennlinien auf unterschiedliche Zeitpunkte bzw. Zeiträume (z.B. Jahreszeiten) sowie unterschiedliche Orte bzw. Streckenabschnitte oder Strecken beziehen.
Weiterhin ist es auch möglich, die Kraftschluss-Schlupfkennlinien in Abhängigkeit von Fahrzeuggeschwindigkeiten, Fahrzeugmassen etc. anzugeben.

Aus den zeit- und ortsabhängigen Kraftschluss-Schlupfkennlinien wird eine digitale thematische Karte erzeugt, welche Zusammenhänge zwischen Kraftschlüssen und Schlüpfen sowie den Kraftschluss-Schlupfkennlinien zugeordnete Sollschlüpfe für unterschiedliche Zeitpunkte bzw. Zeiträume (z.B. Jahreszeiten) sowie unterschiedliche Orte bzw. Streckenabschnitte oder Strecken angibt. Diese Karte ist in Recheneinheiten 14 von Schienenfahrzeugen implementiert und Daten daraus werden an Antriebs- und Bremsregler 15 der Schienenfahrzeuge übertragen. Die Antriebs- und Bremsregler 15 regeln auf Grundlage der Kraftschluss-Schlupfkennlinien Motordrehzahlen und Bremskräfte in einer Weise, dass die zugeordneten Sollschlüpfe eingehalten werden.
Erfindungsgemäß ist es darüber hinaus auch denkbar, die Karte für Verschleiß- und Schädigungsberechnungen von Rädern und Schienen einzusetzen.

In Fig. 3 ist ein beispielhaftes Antriebs- und Bremssystem schematisch dargestellt, in dessen Antriebs- und Bremsmodell in Zusammenhang mit Fig. 1 gezeigte Kraftschluss-Schlupffunktionen berücksichtigt werden, um Sollschlüpfe für einen Antriebs- und Bremsregler 15 eines Schienenfahrzeugs rechnerisch einzustellen, d.h. beispielsweise zu begrenzen. Das Antriebs- und Bremsmodell weist ein elektrisches Teilmodell und ein mechanisches Teilmodell auf.
Das elektrische Teilmodell umfasst eine Regelstrecke in Reihenstruktur mit einem PI-Regler 17, einem PT2-Glied 18 und ein Schnittstellenelement für das mechanische Teilmodell.
Das mechanische Teilmodell bildet einen Antriebsstrang mit einem Elektromotor 19, einer Antriebswelle 20, einem Getriebe 21 mit einem Antriebszahnrad 22 und einem Abtriebszahnrad 23, einer Radsatzwelle 24 mit einem ersten Wellenabschnitt 25 und einem zweiten Wellenabschnitt 26 sowie einem ersten Rad 27 und einem zweiten Rad 28 ab. Die Antriebswelle 20 ist als erste Feder-Dämpfereinheit 29 modelliert, der erste Wellenabschnitt 25 als zweite Feder-Dämpfereinheit 30 und der zweite Wellenabschnitt 26 als dritte Feder-Dämpfereinheit 31.

Das Antriebs- und Bremsmodell beschreibt mechanische, elektrische und regelungstechnische Eigenschaften des Antriebsstrangs und es wird damit ein Schwingverhalten des Antriebsstrangs während Antriebs- und Bremsvorgängen des Schienenfahrzeugs ermittelt. Zusammen mit den Kraftschluss-Schlupffunktionen werden mittels des Antriebs- und Bremsmodells stabile Schlupf-Bereiche ermittelt, für welche aufgrund hoher Eigendämpfung keine Schwingungen zu erwarten sind. Aus diesen stabilen Schlupf-Bereichen werden Sollschlüpfe gewählt und an einen Antriebs- und Bremsregler 15 des Schienenfahrzeugs zur Motordrehzahl- und Bremskraftregelung übertragen.

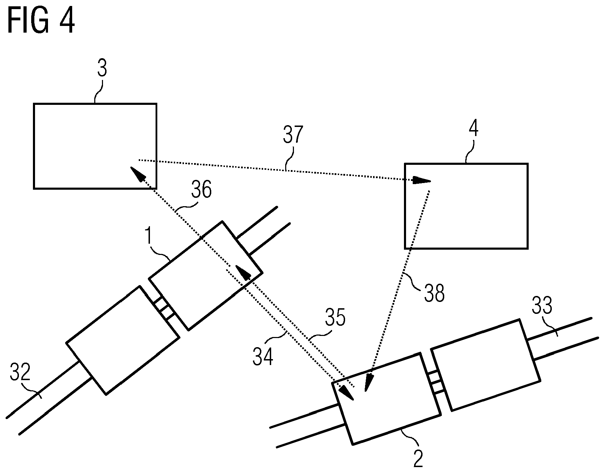

Fig. 4 offenbart eine schematische Darstellung eines ersten Streckenabschnitts 32 mit einem ersten Fahrzeug 1, eines zweiten Streckenabschnitts 33 mit einem zweiten Fahrzeug 2 sowie einer ersten Infrastruktureinrichtung 3 und einer zweiten Infrastruktureinrichtung 4.
Das erste Fahrzeug 1 und das zweite Fahrzeug 2 sind als Schienenfahrzeuge, die erste Infrastruktureinrichtung 3 und die zweite Infrastruktureinrichtung 4 als Betriebszentralen zur Betriebsführung, Steuerung von Stellwerken, Überwachung von Strecken und sonstiger Infrastruktur etc. ausgeführt. Erfindungsgemäß ist es jedoch auch denkbar, die erste Infrastruktureinrichtung 3 und die zweite Infrastruktureinrichtung 4 als Stellwerke auszubilden.
In dem ersten Fahrzeug 1 und dem zweiten Fahrzeug 2 werden, wie in Zusammenhang mit Fig. 1 beschrieben, mittels Sensoren, einer Recheneinheit 14 und entsprechender Leitungswege Kraftschluss-Schlupfkennlinien gebildet und mittels Antriebs-und Bremsreglern 15 Motordrehzahlen sowie Bremskräfte entsprechend dieser Kennlinien geregelt.
Von dem ersten Fahrzeug 1 werden mittels des aus dem Stand der Technik bekannten Global System for Mobile Communication-Railway (GSM-R) und mittels eines ersten Signals 34 Daten bezüglich der Kraftschluss-Schlupfkennlinien an das zweite Fahrzeug 2 übertragen, wodurch sich ein Informationsumfang bezüglich der Kraftschluss-Kennlinien für die Motordrehzahl-und Bremskraftregelung in dem zweiten Fahrzeug 2 vergrößert. Die Motordrehzahl- und Bremskraftregelung des zweiten Fahrzeugs 2 ist daher besonders genau.
Ebenso werden von dem zweiten Fahrzeug 2 mittels eines zweiten Signals 35 Daten bezüglich in dem zweiten Fahrzeug 2 gebildeter Kraftschluss-Schlupfkennlinien an das erste Fahrzeug 1 übertragen.

Weiterhin werden mittels eines dritten Signals 36 Daten bezüglich der Kraftschluss-Schlupfkennlinien von dem ersten Fahrzeug 1 an die erste Infrastruktureinrichtung 3 und mittels eines vierten Signals 37 Daten von der ersten Infrastruktureinrichtung 3 an die zweite Infrastruktureinrichtung 4 übertragen.
In der ersten Infrastruktureinrichtung 3 und der zweiten Infrastruktureinrichtung 4 werden die Kraftschluss-Schlupfkennlinien aggregiert, d.h. zeitlich sowie örtlich zusammengeführt und an Empfänger (beispielsweise weitere Infrastruktureinrichtungen und bzw. oder mittels eines fünften Signals 38 an das zweite Fahrzeug 2 bzw. weitere Fahrzeuge) als Daten mittels GSM-R übertragen.
Die Empfänger können somit Kraftschluss-Schlupfkennlinien verschiedener Zeiten (z.B. Tages- und bzw. oder Jahreszeiten etc.) und Orte (d.h. des ersten Streckenabschnitts 32, des zweiten Streckenabschnitts 33 und bzw. oder weiterer Streckenabschnitte) verarbeiten und auf Grundlage dieser Kraftschluss-Schlupfkennlinien beispielsweise Antriebe und Bremsen regeln oder Verschleiß- und Schädigungsberechnungen durchführen.

Bei einer Datenübertragung mittels GSM-R handelt es sich um eine günstige Lösung.
Erfindungsgemäß ist es jedoch auch vorstellbar, die Daten bezüglich der Kraftschluss-Schlupfkennlinien mittels Kabelleitungen und Balisen etc. zu übertragen.

Das erste Fahrzeug 1 und das zweite Fahrzeug 2 sowie die erste Infrastruktureinrichtung 3 und die zweite Infrastruktureinrichtung 4 weisen für die Datenübertragung geeignete Sende- und Empfangseinheiten (beispielsweise Antennen) auf.

### Liste der Bezeichnungen

- 1: Erstes Fahrzeug
- 2: Zweites Fahrzeug
- 3: Erste Infrastruktureinrichtung
- 4: Zweite Infrastruktureinrichtung
- 5: Drehmomentensensor
- 6: Drehzahlsensor
- 7: Wegimpulsgeber
- 8: Drucksensor
- 9: Referenzgeregelter Synthetisierer
- 10: Beschleunigungssensor
- 11: Erste Kraftschluss-Schlupfkennlinie
- 12: Zweite Kraftschluss-Schlupfkennlinie
- 13: Fahrzeugortungssystem
- 14: Recheneinheit
- 15: Antriebs- und Bremsregler
- 16: Sollschlupfwert
- 17: PI-Regler
- 18: PT2-Glied
- 19: Elektromotor
- 20: Antriebswelle
- 21: Getriebe
- 22: Antriebszahnrad
- 23: Abtriebszahnrad
- 24: Radsatzwelle
- 25: Erster Wellenabschnitt
- 26: Zweiter Wellenabschnitt
- 27: Erstes Rad
- 28: Zweites Rad
- 29: Erste Feder-Dämpfereinheit
- 30: Zweite Feder-Dämpfereinheit
- 31: Dritte Feder-Dämpfereinheit
- 32: Erster Streckenabschnitt
- 33: Zweiter Streckenabschnitt
- 34: Erstes Signal
- 35: Zweites Signal
- 36: Drittes Signal
- 37: Viertes Signal
- 38: Fünftes Signal

## Patentansprüche

1. Verfahren zur Bestimmung von Kraftschlusscharakteristiken bei , Schienenfahrzeugen, wofür zumindest Informationen zumindest eines ersten Fahrzeugs eingesetzt werden,
wobei zeitabhängige Kraftschluss-Schlupfkennlinien, zumindest eine erste Kraftschluss-Schlupfkennlinie (11) und eine zweite Kraftschluss-Schlupfkennlinie (12), gebildet werden, wobei die Kraftschluss-Schlupfkennlinien auf unterschiedliche Zeitpunkte oder Zeiträume sowie unterschiedliche Orte, Streckenabschnitte oder Strecken beziehbar sind, **dadurch gekennzeichnet, dass** aus den Kraftschluss-Schlupfkennlinien unter Einsatz eines Antriebs- und Bremsmodells stabile Schlupf-Bereiche ermittelt werden, für welche aufgrund hoher Eigendämpfung keine Schwingungen des Antriebsstrangs während Antriebs- und Bremsvorgängen zu erwarten sind, aus denen Sollschlüpfe gewählt werden,
dass aus den Kraftschluss-Schlupfkennlinien unter Einsatz eines thermischen Schädigungsmodells Temperaturen zwischen Rädern und Schiene in Abhängigkeit von Kraftschlüssen und Schlüpfen ermittelt werden, wobei die Sollschlüpfe in einer Weise eingestellt werden, dass Austenitisierungstemperaturen der Räder und bzw. oder der Schiene nicht überschritten werden,
wobei die Sollschlüpfe unter Einsatz des Antriebs- und Bremsmodells sowie des thermischen Schädigungsmodells derart eingestellt werden, dass einerseits übermäßiger Verschleiß und Schäden vermieden und andererseits eine möglichst gute Kraftübertragung zwischen Rad und Schiene ermöglicht werden,
und dass mittels der Sollschlüpfe Fahrzeugbewegungen beeinflusst werden.

2. Verfahren nach Anspruch 1, **dadurch gekennzeichnet, dass** Kraftschluss-Schlupfkennlinien, welche von Zeiten und Orten abhängig sind, gebildet werden.

3. Verfahren nach Anspruch 1 oder 2, **dadurch gekennzeichnet, dass** die Kraftschluss-Schlupfkennlinien unter Einsatz von Informationen aus Ortungssignalen eines Fahrzeugortungssystems (13) gebildet werden.

4. Verfahren nach einem der Ansprüche 1, 2 oder 3, **dadurch gekennzeichnet, dass** die Kraftschluss-Schlupfkennlinien unter Einsatz eines Kraftschlussmodells gebildet werden.

5. Verfahren nach einem der Ansprüche 1, 2, 3 oder 4, **dadurch gekennzeichnet, dass** die Kraftschluss-Schlupfkennlinien unter Einsatz von Umweltinformationen gebildet werden.

6. Verfahren nach einem der Ansprüche 2, 3, 4 oder 5, **dadurch gekennzeichnet, dass** aus den Kraftschluss-Schlupfkennlinien zumindest eine thematische Karte gebildet wird.

7. Verfahren nach einem der Ansprüche 1, 2, 3, 4, 5 oder 6, **dadurch gekennzeichnet, dass** die Kraftschluss-Schlupfkennlinien unter Einsatz von Informationen über Querbeschleunigungen des zumindest ersten Fahrzeugs (1) gebildet werden.

8. Verfahren nach einem der Ansprüche 1, 2, 3, 4, 5, 6 oder 7, **dadurch gekennzeichnet, dass** Daten bezüglich der Kraftschluss-Schlupfkennlinien zumindest in dem ersten Fahrzeug (1) verarbeitet werden.

9. Verfahren nach einem der Ansprüche 1, 2, 3, 4, 5, 6, 7 oder 8, **dadurch gekennzeichnet, dass** Daten bezüglich der Kraftschluss-Schlupfkennlinien zumindest in einer ersten Infrastruktureinrichtung (3) verarbeitet werden.

10. Verfahren nach einem der Ansprüche 1, 2, 3, 4, 5, 6, 7, 8 oder 9, **dadurch gekennzeichnet, dass** Informationen bezüglich der Kraftschluss-Schlupfkennlinien von dem zumindest ersten Fahrzeug (1) zumindest an ein zweites Fahrzeug (2) übertragen werden.

11. Verfahren nach einem der Ansprüche 1, 2, 3, 4, 5, 6, 7, 8, 9 oder 10, **dadurch gekennzeichnet, dass** Informationen bezüglich der Kraftschluss-Schlupfkennlinien von dem zumindest ersten Fahrzeug (1) zumindest an die erste Infrastruktureinrichtung (3) übertragen werden.

12. Verfahren nach einem der Ansprüche 1, 2, 3, 4, 5, 6, 7, 8, 9, 10 oder 11, **dadurch gekennzeichnet, dass** Informationen bezüglich der Kraftschluss-Schlupfkennlinien von der zumindest ersten Infrastruktureinrichtung (3) zumindest an das erste Fahrzeug (1) übertragen werden.

13. Verfahren nach einem der Ansprüche 1, 2, 3, 4, 5, 6, 7, 8, 9, 10, 11 oder 12, **dadurch gekennzeichnet, dass** Informationen bezüglich der Kraftschluss-Schlupfkennlinien von der zumindest ersten Infrastruktureinrichtung (3) zumindest an eine zweite Infrastruktureinrichtung (4) übertragen werden.

14. Vorrichtung, welche zur Durchführung des Verfahrens nach einem der Ansprüche 1, 2, 3, 4, 5, 6, 7, 8, 9, 10, 11, 12 oder 13 eingerichtet ist, **dadurch gekennzeichnet,**
**dass** Mittel zur Bildung der Kraftschluss-Schlupfkennlinien, zur Ermittlung der Sollschlüpfe sowie zur Beeinflussung der Fahrzeugbewegungen vorgesehen sind.

## Claims

1. Method for the determination of traction characteristics in rail vehicles, for which at least information about at least one first vehicle is used,
wherein traction-slip characteristic curves over time, at least a first traction-slip characteristic curve (11) and a second traction-slip characteristic curve (12), are formed, wherein the traction-slip characteristic curves can be obtained for different points in time or periods of time and for different locations, track sections or tracks, **characterised in that**
from the traction-slip characteristic curves and using a driving and braking model, stable slip regions are determined for which, due to high self-damping, no vibrations of the drive train are to be expected during driving and braking operations, from which target slips can be selected,
from the traction-slip characteristic curves and using a thermal damage model, temperatures are determined between wheels and rail as a function of tractions and slips, wherein the target slips are set in such a manner that austenitising temperatures of the wheels and/or rail are not exceeded, wherein, using the driving and braking model and the thermal damage model, the target slips are set such that, on the one hand, excessive wear and damage are avoided, and on the other hand, a maximally effective force transmission between wheel and rail is enabled, and
vehicle movements are influenced by means of the target slips.

2. Method according to claim 1, **characterised in that** traction-slip characteristic curves as a function of time and location are formed.

3. Method according to claim 1 or 2, **characterised in that** the traction-slip characteristic curves are formed using information from positioning signals of a vehicle positioning system (13).

4. Method according to one of claims 1, 2 or 3, **characterised in that** the traction-slip characteristic curves are formed using a traction model.

5. Method according to one of claims 1, 2, 3 or 4, **characterised in that** the traction-slip characteristic curves are formed using environmental information.

6. Method according to one of claims 2, 3, 4 or 5, **characterised in that** at least one thematic map is formed from the traction-slip characteristic curves.

7. Method according to one of claims 1, 2, 3, 4, 5 or 6, **characterised in that** the traction-slip characteristic curves are formed using information about lateral accelerations of at least the first vehicle (1).

8. Method according to one of claims 1, 2, 3, 4, 5, 6 or 7, **characterised in that** data relating to the traction-slip characteristic curves is processed at least in the first vehicle (1).

9. Method according to one of claims 1, 2, 3, 4, 5, 6, 7 or 8, **characterised in that** data relating to the traction-slip characteristic curves is processed at least in a first infrastructure facility (3).

10. Method according to one of claims 1, 2, 3, 4, 5, 6, 7, 8 or 9, **characterised in that** information relating to the traction-slip characteristic curves is transferred from at least the first vehicle (1) at least to a second vehicle (2).

11. Method according to one of claims 1, 2, 3, 4, 5, 6, 7, 8, 9 or 10, **characterised in that** information relating to the traction-slip characteristic curves is transferred from at least the first vehicle (1) at least to the first infrastructure facility (3).

12. Method according to one of claims 1, 2, 3, 4, 5, 6, 7, 8, 9, 10 or 11, **characterised in that** information relating to the traction-slip characteristic curves is transferred from at least the first infrastructure facility (3) at least to the first vehicle (1).

13. Method according to one of claims 1, 2, 3, 4, 5, 6, 7, 8, 9, 10, 11 or 12, **characterised in that** information relating to the traction-slip characteristic curves is transferred from at least the first infrastructure facility (3) at least to a second infrastructure facility (4).

14. Device configured for executing the method according to one of claims 1, 2, 3, 4, 5, 6, 7, 8, 9, 10, 11, 12 or 13, **characterised in that** means of forming the traction-slip characteristic curves, determining the target slips and influencing the vehicle movements are provided.

## Revendications

1. Procédé de détermination de caractéristiques de force d'adhérence pour des véhicules ferroviaires, pour lequel au moins des informations d'au moins un premier véhicule sont utilisées,
dans lequel des courbes caractéristiques de force d'adhérence-glissement en fonction du temps, au moins une première courbe caractéristique (11) de force d'adhérence-glissement, et au moins une seconde courbe caractéristique (12) de force d'adhérence-glissement sont formées, et dans lequel les courbes caractéristiques de force d'adhérence-glissement peuvent se référer à des moments ou des intervalles de temps différents ainsi qu'à des endroits, parties de tronçon ou tronçons différents,
**caractérisé en ce que** des plages de glissement stables sont déterminées à partir des courbes caractéristiques de force d'adhérence-glissement en utilisant un modèle de propulsion et de freinage, pour lesquelles plages, en raison d'un amortissement propre élevé, aucune oscillation de la chaîne cinématique durant des opérations de propulsion et de freinage n'est à attendre, et à partir desquelles plages des glissements cibles sont sélectionnés, et
**en ce que** des températures entre les roues et le rail sont déterminées en fonction des forces d'adhérence et des glissements à partir des courbes caractéristiques de force d'adhérence-glissement en utilisant un modèle d'endommagement thermique, dans lequel les glissements cibles sont adaptés de manière à ce que les températures d'austénisation des roues et/ou du rail ne soient pas dépassées,
et dans lequel les glissements cibles sont adaptés, en utilisant le modèle de propulsion et de freinage ainsi que le modèle d'endommagement thermique, de manière d'une part à éviter une usure et un endommagement excessifs et d'autre part à permettre une transmission de force la meilleure possible entre la roue et le rail, et
**en ce que** des déplacements du véhicule sont modulés au moyen des glissements cibles.

2. Procédé selon la revendication 1, **caractérisé en ce que** des courbes caractéristiques de force d'adhérence-glissement en fonction des moments et des endroits sont formées.

3. Procédé selon la revendication 1 ou 2, **caractérisé en ce que** les courbes caractéristiques de force d'adhérence-glissement sont formées en utilisant des informations provenant de signaux de localisation d'un système de localisation de véhicule (13).

4. Procédé selon l'une des revendications 1, 2 ou, **caractérisé en ce que** les courbes caractéristiques de force d'adhérence-glissement sont formées en utilisant un modèle de force d'adhérence.

5. Procédé selon l'une des revendications 1, 2, 3 ou 4, **caractérisé en ce que** les courbes caractéristiques de force d'adhérence-glissement sont formées en utilisant des informations relatives à l'environnement.

6. Procédé selon l'une des revendications 2, 3, 4 ou 5, **caractérisé en ce qu'**au moins une carte thématique est formée à partir des courbes caractéristiques de force d'adhérence-glissement.

7. Procédé selon l'une des revendications 1, 2, 3, 4, 5 ou 6, **caractérisé en ce que** les courbes caractéristiques de force d'adhérence-glissement sont formées en utilisant des informations ayant trait à des accélérations transversales du au moins un premier véhicule (1).

8. Procédé selon l'une des revendications 1, 2, 3, 4, 5, 6 ou 7, **caractérisé en ce que** des données concernant les courbes caractéristiques de force d'adhérence-glissement sont traitées au moins dans le premier véhicule (1).

9. Procédé selon l'une des revendications 1, 2, 3, 4, 5, 6, 7 ou 8, **caractérisé en ce que** des données concernant les courbes caractéristiques de force d'adhérence-glissement sont traitées au moins dans un premier dispositif d'infrastructure (3).

10. Procédé selon l'une des revendications 1, 2, 3, 4, 5, 6, 7, 8 ou9, **caractérisé en ce que** des informations concernant les courbes caractéristiques de force d'adhérence-glissement sont transmises par le au moins un premier véhicule (1) au moins à un second véhicule (2).

11. Procédé selon l'une des revendications 1, 2, 3, 4, 5, 6, 7, 8, 9 ou 10, **caractérisé en ce que** des informations concernant les courbes caractéristiques de force d'adhérence-glissement sont transmises par le au moins un premier véhicule (1) au moins au premier dispositif d'infrastructure (3).

12. Procédé selon l'une des revendications 1, 2, 3, 4, 5, 6, 7, 8, 9, 10 ou 11, **caractérisé en ce que** des informations concernant les courbes caractéristiques de force d'adhérence-glissement sont transmises par le au moins un premier dispositif d'infrastructure (3) au moins au premier véhicule (1).

13. Procédé selon l'une des revendications 1, 2, 3, 4, 5, 6, 7, 8, 9, 10, 11 ou 12, **caractérisé en ce que** des informations concernant les courbes caractéristiques de force d'adhérence-glissement sont transmises par le au moins un premier dispositif d'infrastructure (3) au moins à un second dispositif d'infrastructure (4).

14. Dispositif, qui est configuré pour exécuter un procédé selon l'une des revendications 1, 2, 3, 4, 5, 6, 7, 8, 9, 10, 11, 12 ou 13, **caractérisé en ce que** des moyens permettant de former des courbes caractéristiques de force d'adhérence-glissement, de déterminer des glissements cibles et de moduler des déplacements de véhicule sont prévus.
